## Europäisches Patentamt
## European Patent Office
## Office européen des brevets

(11) Veröffentlichungsnummer: **0 294 361**
**A2**

# (12) EUROPÄISCHE PATENTANMELDUNG

(21) Anmeldenummer: 88890120.4

(22) Anmeldetag: 13.05.88

(51) Int. Cl.⁴: **E 06 B 7/14**

(30) Priorität: 04.06.87 AT 1417/87

(43) Veröffentlichungstag der Anmeldung:
07.12.88 Patentblatt 88/49

(84) Benannte Vertragsstaaten:
BE CH DE ES FR GB GR IT LI NL SE

(71) Anmelder: INTERNORM FENSTER GESELLSCHAFT M.B.H.
Ganglgutstrasse 131
A-4050 Traun-Ödt (AT)

(72) Erfinder: Stundner, Wolfgang
Birkenstrasse 13
A-4600 Wels (AT)

(74) Vertreter: Hübscher, Heiner, Dipl.-Ing. et al
Spittelwiese 7
A-4020 Linz (AT)

(54) Holzrahmen für Fenster- oder Türstöcke.

(57) Ein Holzrahmen (1) für Fenster- oder Türstöcke besteht aus Rahmenschenkeln (2) gleicher Querschnittsform, wobei eine allen Rahmenschenkeln entlang umlaufende Schutzschiene (5) aus Kunststoff den Falzbereich der Rahmenschenkel (2) abdeckt, welche Schutzschiene (5) mit einer Dichtleiste (7) zusammenwirkt und über Kanäle des unteren Rahmenschenkels nach außen entwässerbar ist.

Um eine sichere Wasserableitung und eine langlebige, frostsichere Abdichtung zu erreichen, weist die in einem Klebe- und/oder Dichtmittelbett (6) auf den Rahmenschenkeln (2) verlegte Schutzschiene (5) ein offenes Rinnenprofil auf und bildet einen dichtleistenfreien Wasserablauf, wobei die innere Rinnenwand als Anlage (5a) für die dem Flügelrahmen (4) zugeordnete Dichtleiste (7) dient und an die Rinne durch die Kanäle des unteren Rahmenschenkels (2) hindurchragende Kanülen (8) angeschlossen sind.

EP 0 294 361 A2

## Beschreibung

## Holzrahmen für Fenster- oder Türstöcke

Die Erfindung bezieht sich auf einen Holzrahmen für Fenster- oder Türstöcke, bestehend aus Rahmenschenkeln gleicher Querschnittsform, wobei eine allen Rahmenschenkeln entlang umlaufende Schutzschiene aus Metall oder Kunststoff den durch einen hochragenden äußeren Randsteg entstehenden Falzbereich der Rahmenschenkel abdeckt, welche Schutzschiene einerseits zur Abdichtung gegenüber dem zugehörigen Flügelrahmen mit einer Dichtleiste zusammenwirkt und anderseits zur Ableitung eingedrungenen Wassers über Kanäle des unteren Rahmenschenkels nach außen entwässerbar ist.

Hölzerne Stockrahmen besitzen bisher im allgemeinen lediglich am unteren Rahmenschenkel eine Regenschutzschiene, so daß diese Rahmen aus unterschiedlichen Holzprofilen zusammengesetzt werden müssen. Es kommt zu einem entsprechenden Herstellungsaufwand, der umfangreiche und teure Werkzeugsätze für die Profilfertigung voraussetzt. Darüber hinaus können diese eine offene Rinne bildenden Regenschutzschienen das Regenwasser aus den Seitenschenkelbereichen nicht oder nur unzureichend abführen und die aus Metall bestehenden Regenschutzschienen stellen unerwünschte Kältebrücken dar. Nicht zuletzt bleiben die bekannten Regenschutzschienen von außen sichtbar und beeinträchtigen den optischen Eindruck der Holzfenster oder -türen.

Wie die DE-OS 23 43 105 zeigt, wurde auch schon ein aus Rahmenschenkeln gleichen Querschnittes bestehender Holzrahmen für Fenster vorgeschlagen, der eine umlaufende, mit einer Dichtleiste zusammenwirkende Schutzschiene auf aufweist. Diese Schutzschiene dient zur Halterung der Dichtleiste und Abschirmung der Schenkeloberflächen vor Feuchtigkeit, nicht aber als offene Rinne zur Wasserableitung. Die Dichtleiste aus Moosgummi ist alterungsanfällig, ein Feuchtwerden bei nassem Wetter ist unvermeidlich und in kalter Jahreszeit ist häufig ein Anfrieren des Flügelrahmens zu befürchten. Auch läßt sich die Feuchtigkeit durch die lediglich in die Rahmenschenkel eingewalzte Schutzschiene nicht sicher vom Holz des Rahmens fernhalten, da einerseits Feuchtigkeit die Schiene selbst unterwandert und anderseits durch die Entwässerungskanäle für die Schutzschiene, die als blanke Bohrungen vorgesehen sind, eingedrungenes Wasser unmittelbar mit dem Rahmenholz in Verbindung gebracht wird, so daß diese Dichtung weder hinsichtlich ihrer Dauerhaftigkeit noch hinsichtlich ihrer Wirksamkeit befriedigt.

Der Erfindung liegt daher die Aufgabe zugrunde, diese Mängel zu beseitigen und einen Holzrahmen der eingangs geschilderten Art zu schaffen, der bei rationeller Herstellung eine sichere Wasserabfuhr gewährleistet und eine praktisch unsichtbare, winterfeste und wärmetechnisch unbedenkliche Fenster- oder Türabdichtung ermöglicht.

Die Erfindung löst diese Aufgabe dadurch, daß die in an sich bekannter Weise in einem Klebe- und/oder Dichtmittelbett auf den Rahmenschenkeln verlegte Schutzschiene ein offenes Rinnenprofil aufweist und einen dichtleistenfreien Wasserablauf bildet, wobei die innere Rinnenwand als Anlage für die dem Flügelrahmen zugeordnete Dichtleiste dient und an die Rinne durch die Kanäle des unteren Rahmenschenkels hindurchragende Kanülen angeschlossen sind.

Die Schutzschiene stellt somit eine innere Ablaufrinne dar und gewährleistet eine einwandfreie Wasserableitung, wobei sie zumindest von außen unsichtbar bleibt und keine direkten, die Innen- und Außenseiten des Rahmens verbindende Kältebrükken bilden kann. Die Wasserabfuhr erfolgt durch die den unteren Rahmenschenkel durchragenden Kanülen, so daß das Wasser aus der Schutzschiene sofort wieder nach außen abgeführt wird, ohne das Holz des Rahmens zu gefährden, wobei das Verlegen der Schiene in einem geeigneten Klebe- und/oder Dichtmittelbett ein Eindringen von Feuchtigkeit zwischen Rahmenschenkel und Schutzschiene sicher verhindert. Da die Schutzschiene an der Innenseite einen Anschlag für eine Dichtleiste, die am zugehörigen Flügel befestigt ist, ergibt, braucht ein Durchsickern von Wasser durch den Falzbereich zwischen Stockrahmen und Flügelrahmen und auch ein Anfrieren des Flügelrahmens nicht befürchtet zu werden, und da die Schutzschiene von den Rahmenschenkeln nach außen hin abgedeckt und dadurch vor Witterungs- und Sonneneinflüssen geschützt wird, kann sie aus Kunststoff bestehen, der besonders holzverträglich ist und wegen seiner schlechten Wärmeleitfähigkeit zur Wärmedämmung beiträgt. Es entsteht ein Holzrahmen aus einheitlichen Holzprofilen, aus welchen Holzprofilen auch gegebenenfalls die Kämpfer und Pfosten bestehen können, der eine absolut dichte, frostsichere und langlebige Fenster- oder Türabdichtung mit sich bringt.

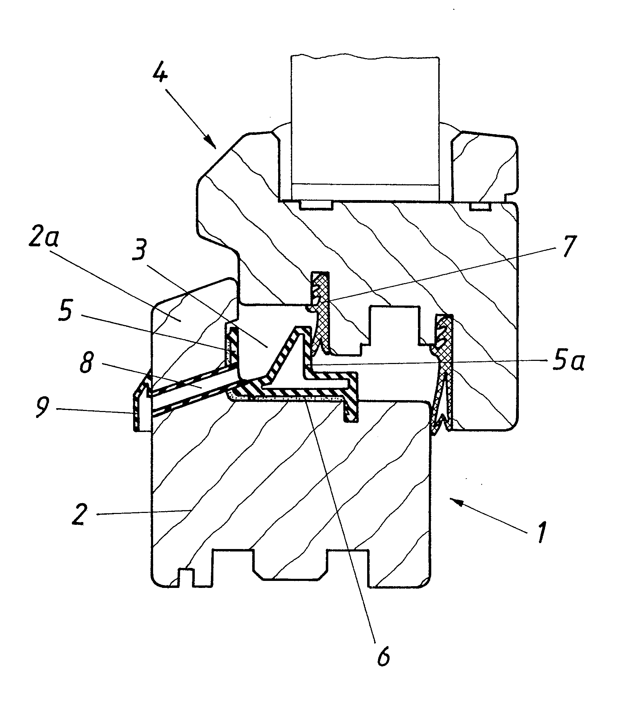

In der Zeichnung ist ein erfindungsgemäßer Holzrahmen beispielsweise an Hand eines Querschnittes durch den unteren Rahmenschenkel veranschaulicht.

Ein Holzrahmen 1 für einen Fensterstock ist aus Rahmenschenkeln 2 gleicher Querschnittsform zusammengesetzt. Die Rahmenschenkel 2 nehmen im Falzbereich 3 zwischen dem Holzrahmen 1 des Stockes und dem Holzrahmehn 4 des zugehörigen Fensterflügels eine allen Rahmenschenkeln entlang umlaufende Schutzschiene 5 aus Kunststoff, vorzugsweise PVC, auf, wobei ein hochragender Randsteg 2a der Rahmenschenkel 2 die Schutzschiene 5 nach außen hin abdeckt. Die Schutzschiene 5 ist auf den Rahmenschenkeln 2 in einem Klebe- und Dichtmittelbett 6 verlegt und bildet ein offenes Rinnenprofil, dessen innere Rinnenwand als Anlage 5a für eine Dichtleiste 7 des Flügel-Holzrahmens 4 dient. Zur Wasserableitung schließen an die Schutzschiene 5 Kanülen 8 an, die durch Bohrungen des unteren Rahmenschenkels 2 auswärts führen und mündungsseitig durch eine Blendkappe 9 abgedeckt sind.

**0 294 361**

**Patentansprüche**

Holzrahmen (1) für Fenster oder Türstöcke, bestehend aus Rahmenschenkeln (2) gleicher Querschnittsform, wobei eine allen Rahmenschenkeln entlang umlaufende Schutzschiene (5) aus Metall oder Kunststoff den durch einen hochragenden äußeren Randsteg entstehenden Falzbereich (3) der Rahmenschenkel (2) abdeckt, welche Schutzschiene (5) einerseits zur Abdichtung gegenüber dem zugehörigen Flügelrahmen (4) mit einer Dichtleiste (7) zusammenwirkt und anderseits zur Ableitung eingedrungegen Wassers über Kanäle des unteren Rahmenschenkels (2) nach außen entwässerbar ist, dadurch gekennzeichnet, daß die in an sich bekannter Weise in einem Klebe-und/oder Dichtmittelbett (6) auf den Rahmenschenkeln (2) verlegte Schutzschiene (5) ein offenes Rinnenprofil aufweist und einen dichtleistenfreien Wasserablauf bildet, wobei die innere Rinnenwand als Anlage (5a) für die dem Flügelrahmen zugeordnete Dichtleiste (7) dient und an die Rinne durch die Kanäle des unteren Rahmenschenkels (2) hindurchragende Kanülen (8) angeschlossen sind.

0294361